# EUROPEAN PATENT APPLICATION

(11) **EP 4 823 006 A1**
(43) Date of publication of application: **14.10.2026**
(21) Application number: 25739133.4
(22) Date of filing: 10.01.2025
(51) Int. Cl.: H04B 7/06, H04W 72/23

(54) **METHOD AND DEVICE FOR CONFIGURING ANTENNA FOR COMMUNICATION SYSTEM**

(30) Priority: 10.01.2024 KR 20240004203
(71) Applicant: Samsung Electronics Co., Ltd., Suwon-si, Gyeonggi-do 16677 (KR)
(72) Inventor: KIM, Younsun, Suwon-si, Gyeonggi-do 16677 (KR); SHIN, Cheolkyu, Suwon-si, Gyeonggi-do 16677 (KR); YI, Junyung, Suwon-si, Gyeonggi-do 16677 (KR); CHOI, Kyungjun, Suwon-si, Gyeonggi-do 16677 (KR)
(74) Representative: Gulde & Partner
(86) International application number: PCT/KR2025/000620
(87) International publication number: WO 2025/150973

(57) **Abstract**

The present disclosure relates to a 5G or 6G communication system for supporting higher data transmission rates. A method according to an embodiment of the present disclosure may comprise the steps of: receiving a channel state information (CSI) report-related configuration through higher layer signaling; identifying a first number of channel state information reference signal (CSI-RS) antenna port subsets on the basis of the CSI report-related configuration; identifying a second number of reception antenna port subsets; determining, on the basis of a CSI-RS antenna port subset-related priority and a reception antenna port subset-related priority, one or more CSI-RS antenna port subsets among the first number of CSI-RS antenna port subsets and determining one or more reception antenna port subsets among the second number of reception antenna port subsets; determining one or more CSI parameters on the basis of the one or more CSI-RS antenna port subsets and the one or more reception antenna port subsets; and transmitting a CSI report including the one or more CSI parameters.

## Description

### [Technical Field]

The disclosure generally relates to a wireless communication system and, more particularly, to a method and device for transmitting and receiving antenna activation and deactivation signals of a base station and a UE for reducing power consumption and improving energy efficiency of the base station and the UE.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulationrelated requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

The disclosure proposes various base station-UE interoperation methods for transmitting and receiving antenna activation and deactivation signals of a base station and a UE in a wireless communication system.

Technical subjects pursued in various embodiments of the disclosure are not limited to the above-mentioned matters, and other technical subjects not mentioned herein may be considered by those skilled in the art from various embodiments of the disclosure to be described below.

### [Solution to Problem]

A method performed by a terminal in a communication system according to an embodiment of the disclosure includes receiving a channel state information (CSI) report-related configuration through higher layer signaling; identifying a first number of channel state information reference signal (CSI-RS) antenna port subsets based on the CSI report-related configuration; identifying a second number of reception antenna port subsets; determining, based on a CSI-RS antenna port subset-related priority and a reception antenna port subset-related priority, one or more CSI-RS antenna port subsets among the first number of CSI-RS antenna port subsets and determining one or more reception antenna port subsets among the second number of reception antenna port subsets; determining one or more CSI parameters based on the one or more CSI-RS antenna port subsets and the one or more reception antenna port subsets; and transmitting a CSI report including the one or more CSI parameters.

According to an embodiment of the disclosure, the first number of CSI-RS antenna port subsets correspond to different priorities.

According to an embodiment of the disclosure, the second number of reception antenna port subsets correspond to different priorities.

According to an embodiment of the disclosure, when the CSI-RS antenna port subset-related priority is higher than the reception antenna port subset-related priority, the one or more reception antenna port subsets are determined based on different priorities corresponding to the second number of reception antenna port subsets after the one or more CSI-RS antenna port subsets are determined based on different priorities corresponding to the first number of CSI-RS antenna port subsets.

According to an embodiment of the disclosure, when the reception antenna port subset-related priority is higher than the CSI-RS antenna port subset-related priority, the one or more CSI-RS antenna port subsets are determined based on different priorities corresponding to the first number of CSI-RS antenna port subsets after the one or more reception antenna port subsets are determined based on different priorities corresponding to the second number of reception antenna port subsets.

According to an embodiment of the disclosure, the high/low relationship between the CSI-RS antenna port subset-related priority and the reception antenna port subset-related priority is predetermined is predefined, determined by an explicit indication, or determined by an implicit indication.

According to an embodiment of the disclosure, one CSI parameter is based on one CSI-RS antenna port subset and one receive antenna port subset.

According to an embodiment of the disclosure, when the CSI-RS antenna port subset-related priority is higher than the reception antenna port subset-related priority, the number of the one or more reception antenna port subsets is based on the overhead of a CSI report, and a report for the CSI parameters related to the remaining reception antenna port subsets, excluding the one or more reception antenna port subsets from the second number of reception antenna port subsets, is dropped.

According to an embodiment of the disclosure, when the reception antenna port subset-related priority is higher than the CSI-RS antenna port subset-related priority, the number of the one or more CSI-RS antenna port subsets is based on the overhead of the CSI report, and a report for the CSI parameters related to the remaining CSI-RS antenna port subsets, excluding the one or more CSI-RS antenna port subsets from the first number of CSI-RS antenna port subsets, is dropped.

According to an embodiment of the disclosure, the CSI overhead is related to the processing capability of the terminal for the CSI report.

According to an embodiment of the disclosure, each reception antenna port subset includes one or more of the plurality of reception antenna ports of the terminal.

According to an embodiment of the disclosure, the number of reception antenna ports included in each reception antenna port subset is greater than or equal to the number of maximum transmission layers related to the capability of the terminal.

According to an embodiment of the disclosure, information on the number of reception antenna ports included in each reception antenna port subset is included in the CSI report.

According to an embodiment of the disclosure, the method further includes receiving, through dynamic signaling, indication information indicating activation or deactivation of one or more of the plurality of reception antenna ports of the terminal after transmission of the CSI report.

A terminal in a communication system according to an embodiment of the disclosure includes a transceiver; and a processor connected to the transceiver, wherein the processor is configured to receive a channel state information (CSI) report-related configuration through higher layer signaling; identify a first number of channel state information reference signal (CSI-RS) antenna port subsets based on the CSI report-related configuration; identify a second number of reception antenna port subsets; determine, based on a CSI-RS antenna port subset-related priority and a reception antenna port subset-related priority, one or more CSI-RS antenna port subsets among the first number of CSI-RS antenna port subsets and determine one or more reception antenna port subsets among the second number of reception antenna port subsets; determine one or more CSI parameters based on the one or more CSI-RS antenna port subsets and the one or more reception antenna port subsets; and transmit a CSI report including the one or more CSI parameters.

According to an embodiment of the disclosure, the first number of CSI-RS antenna port subsets correspond to different priorities.

According to an embodiment of the disclosure, the second number of reception antenna port subsets correspond to different priorities.

According to an embodiment of the disclosure, when the CSI-RS antenna port subset-related priority is higher than the reception antenna port subset-related priority, the one or more reception antenna port subsets are determined based on different priorities corresponding to the second number of reception antenna port subsets after the one or more CSI-RS antenna port subsets are determined based on different priorities corresponding to the first number of CSI-RS antenna port subsets.

According to an embodiment of the disclosure, when the reception antenna port subset-related priority is higher than the CSI-RS antenna port subset-related priority, the one or more CSI-RS antenna port subsets are determined based on different priorities corresponding to the first number of CSI-RS antenna port subsets after the one or more reception antenna port subsets are determined based on different priorities corresponding to the second number of reception antenna port subsets.

According to an embodiment of the disclosure, the high/low relationship between the CSI-RS antenna port subset-related priority and the reception antenna port subset-related priority is predetermined is predefined, determined by an explicit indication, or determined by an implicit indication.

According to an embodiment of the disclosure, one CSI parameter is based on one CSI-RS antenna port subset and one receive antenna port subset.

According to an embodiment of the disclosure, when the CSI-RS antenna port subset-related priority is higher than the reception antenna port subset-related priority, the number of the one or more reception antenna port subsets is based on the overhead of a CSI report, and a report for the CSI parameters related to the remaining reception antenna port subsets, excluding the one or more reception antenna port subsets from the second number of reception antenna port subsets, is dropped.

According to an embodiment of the disclosure, when the reception antenna port subset-related priority is higher than the CSI-RS antenna port subset-related priority, the number of the one or more CSI-RS antenna port subsets is based on the overhead of the CSI report, and a report for the CSI parameters related to the remaining CSI-RS antenna port subsets, excluding the one or more CSI-RS antenna port subsets from the first number of CSI-RS antenna port subsets, is dropped.

According to an embodiment of the disclosure, the CSI overhead is related to the processing capability of the terminal for the CSI report.

According to an embodiment of the disclosure, each reception antenna port subset includes one or more of the plurality of reception antenna ports of the terminal.

According to an embodiment of the disclosure, the number of reception antenna ports included in each reception antenna port subset is greater than or equal to the number of maximum transmission layers related to the capability of the terminal.

According to an embodiment of the disclosure, information on the number of reception antenna ports included in each reception antenna port subset is included in the CSI report.

According to an embodiment of the disclosure, the processor is configured to receive, through dynamic signaling, indication information indicating activation or deactivation of one or more of the plurality of reception antenna ports of the terminal after transmission of the CSI report.

A method performed by a base station in a communication system according to an embodiment of the disclosure includes identifying a first number of channel state information reference signal (CSI-RS) antenna port subsets; transmitting, to a terminal through higher layer signaling, a channel state information (CSI) report-related configuration related to the first number of CSI-RS antenna port subsets; and receiving, from the terminal, a CSI report including one or more CSI parameters.

According to an embodiment of the disclosure, the one or more CSI parameters are based on one or more CSI-RS antenna port subsets among the first number of CSI-RS antenna port subsets and one or more reception antenna port subsets among the second number of reception antenna port subsets of the terminal.

According to an embodiment of the disclosure, the one or more CSI-RS antenna port subsets and the one or more reception antenna port subsets are based on a CSI-RS antenna port subset-related priority and a reception antenna port subset-related priority.

According to an embodiment of the disclosure, the first number of CSI-RS antenna port subsets correspond to different priorities.

According to an embodiment of the disclosure, the second number of reception antenna port subsets correspond to different priorities.

According to an embodiment of the disclosure, when the CSI-RS antenna port subset-related priority is higher than the reception antenna port subset-related priority, the one or more reception antenna port subsets are determined based on different priorities corresponding to the second number of reception antenna port subsets after the one or more CSI-RS antenna port subsets are determined based on different priorities corresponding to the first number of CSI-RS antenna port subsets.

According to an embodiment of the disclosure, when the reception antenna port subset-related priority is higher than the CSI-RS antenna port subset-related priority, the one or more CSI-RS antenna port subsets are determined based on different priorities corresponding to the first number of CSI-RS antenna port subsets after the one or more reception antenna port subsets are determined based on different priorities corresponding to the second number of reception antenna port subsets.

According to an embodiment of the disclosure, the method further includes transmitting, to the terminal through dynamic signaling, indication information indicating activation or deactivation of one or more of the multiple reception antenna ports of the terminal after reception of the CSI report.

A base station in a communication system according to an embodiment of the disclosure includes a transceiver; and a processor connected to the transceiver, wherein the processor is configured to: identify a first number of channel state information reference signal (CSI-RS) antenna port subsets; transmit, to a terminal through higher layer signaling, a channel state information (CSI) report-related configuration related to the first number of CSI-RS antenna port subsets; and receive, from the terminal, a CSI report including one or more CSI parameters.

According to an embodiment of the disclosure, the one or more CSI parameters are based on one or more CSI-RS antenna port subsets among the first number of CSI-RS antenna port subsets and one or more reception antenna port subsets among the second number of reception antenna port subsets of the terminal.

According to an embodiment of the disclosure, the one or more CSI-RS antenna port subsets and the one or more reception antenna port subsets are based on a CSI-RS antenna port subset-related priority and a reception antenna port subset-related priority.

According to an embodiment of the disclosure, the first number of CSI-RS antenna port subsets correspond to different priorities.

According to an embodiment of the disclosure, the second number of reception antenna port subsets correspond to different priorities.

According to an embodiment of the disclosure, when the CSI-RS antenna port subset-related priority is higher than the reception antenna port subset-related priority, the one or more reception antenna port subsets are determined based on different priorities corresponding to the second number of reception antenna port subsets after the one or more CSI-RS antenna port subsets are determined based on different priorities corresponding to the first number of CSI-RS antenna port subsets.

According to an embodiment of the disclosure, when the reception antenna port subset-related priority is higher than the CSI-RS antenna port subset-related priority, the one or more CSI-RS antenna port subsets are determined based on different priorities corresponding to the first number of CSI-RS antenna port subsets after the one or more reception antenna port subsets are determined based on different priorities corresponding to the second number of reception antenna port subsets.

Various embodiments of the disclosure as described above are merely some of preferred embodiments of the disclosure, and various embodiments reflecting technical features of the various embodiments of the disclosure may be derived and understood by those skilled in the art, based on the detailed description to be described below.

### [Advantageous Effects of Invention]

It is expected that, through the disclosure, effects such as reduction of power consumption and improvement of energy efficiency of a UE and a base station in a wireless communication system may be achieved.

Advantageous effects obtainable from various embodiments of the disclosure are not limited to the above-mentioned effects, and other effects not mentioned herein may be clearly derived and understood by those skilled in the art from the following detailed description.

### [Brief Description of Drawings]

FIG. 1 illustrates a basic structure of a time-frequency resource domain according to an embodiment of the disclosure.
FIG. 2 illustrates an extended frame structure according to an embodiment of the disclosure.
FIG. 3 illustrates an extended frame structure according to an embodiment of the disclosure.
FIG. 4 illustrates an extended frame structure according to an embodiment of the disclosure.
FIG. 5 illustrates a physical antenna, an antenna port, and a layer for a base station downlink according to an embodiment of the disclosure.
FIG. 6 is a diagram illustrating a channel state information framework in a 5G NR system according to an embodiment of the disclosure.
FIG. 7 illustrates an example of CSI-RS RE designation by CSI-RS resource mapping according to an embodiment of the disclosure.
FIG. 8 illustrates an example of a method for activating/deactivating some of antenna ports of a UE according to an embodiment of the disclosure.
FIG. 9 illustrates an example of a method for activating/deactivating some of antenna ports of a UE according to an embodiment of the disclosure.
FIG. 10 illustrates an example of a method for activating/deactivating some of antenna ports of a base station according to an embodiment of the disclosure.
FIG. 11 illustrates an example of a method for activating/deactivating some of antenna ports of a UE according to an embodiment of the disclosure.
FIG. 12 illustrates a structure of a UE according to an embodiment of the disclosure.
FIG. 13 illustrates a structure of a base station according to an embodiment of the disclosure.

### [Mode for the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. In addition, the sizes of respective components do not entirely reflect their actual sizes. The same or like elements in each drawing are denoted by the same or like reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" performs certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, according to some embodiments, the "unit" may include one or more processors.

Hereinafter, the operation principle of the disclosure will be described in detail with reference to the accompanying drawings. In describing the disclosure below, a detailed description of known functions or configurations incorporated herein will be omitted when it is determined that the description may make the subject matter of the disclosure unnecessarily unclear. Also, the terms which will be described below are terms defined in consideration of the functions in the disclosure, and may be different according to users, intentions of the users, or customs. Accordingly, the definitions thereof should be made based on the contents throughout the specification.

In the following description, terms referring to broadcast information, terms referring to control information, terms related to communication coverage, terms referring to state changes (e.g., an event), terms referring to network entities, terms referring to messages, terms referring to device elements, and the like are illustratively used for the sake of descriptive convenience. Therefore, the disclosure is not limited by the terms as described below, and other terms having equivalent technical meanings may be used. As used hereinafter, a base station is an entity that allocates resources to terminals, and may be at least one of a gNode B, an eNode B, a Node B, a base station (BS), a wireless access unit, a base station controller, or a node on a network. A terminal may include a user equipment (UE), a mobile station (MS), a cellular phone, a smartphone, a computer, or a multimedia system capable of performing communication functions. Of course, examples of the base station and the terminal are not limited to examples above.

Hereinafter, a technology for transmitting/receiving broadcast information between a terminal and a base station will be described. The disclosure relates to a communication method for converging broadband communication systems for providing high-speed and high-quality services with application services such as Internet of things (IoT) services, and a system therefor. The disclosure may be applied to intelligent services (e.g., smart homes, smart buildings, smart cities, smart cars or connected cars, healthcare, digital education, retail business, security and safety-related services, etc.), based on 5G and 6G communication technology and IoT-related technology.

In the following description, some of terms and names defined in the 3rd generation partnership project long term evolution (3GPP LTE) and 5G new radio (NR) standards may be used for the sake of descriptive convenience. However, the disclosure is not limited by these terms and names, and may be applied in the same way to systems that conform other specifications.

A wireless communication system is evolving to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-A Pro, high-rate packet data (HRPD) of 3GPP2, ultra-mobile broadband (UMB), IEEE 802.16e, and the like, as well as typical voicebased services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a UE transmits data or control signals to a base station, and the downlink refers to a radio link via which the base station transmits data or control signals to the UE. The above multiple access scheme separates data or control information of respective users by allocating and operating time-frequency spatial resources for transmitting the data or control information for each user so as to avoid overlapping each other, that is, so as to establish orthogonality.

Since 5G and 6G communication systems as a post-LTE communication system must freely reflect various requirements of users, service providers, and the like, services satisfying various requirements must be supported. The services considered in the 5G and 6G communication systems include enhanced mobile broadband (eMBB) communication, massive machine-type communication (mMTC), ultrareliability low-latency communication (URLLC), and the like.

According to some embodiments, eMBB aims at providing a higher data rate than that supported by conventional LTE, LTE-A, or LTE-Pro. For example, in the 5G and 6G communication systems, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G and 6G communication systems may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the IoT in the 5G and 6G communication systems. mMTC has requirements, such as support of connection of a large number of UEs in a cell, enhancement coverage of UEs, improved battery time, a reduction in the cost of a UE, and the like, in order to effectively provide the IoT. Since the Internet of Things provides communication functions while being provided to various sensors and various devices, it must support a large number of UEs (e.g., 1,000,000 UEs/km2) in a cell. In addition, the UEs supporting mMTC may require wider coverage than those of other services provided by the 5G and 6G communication systems because the UEs are likely to be located in a shadow area, such as a basement of a building, which is not covered by the cell due to the nature of the service. The UE supporting mMTC must be configured to be inexpensive, and may require a very long battery life-time because it is difficult to frequently replace the battery of the UE.

Lastly, URLLC is a cellular-based mission-critical wireless communication service, may be used for services such as remote control for robots or machines, industrial automation, unmanned aerial vehicles, remote health care, and emergency alert, and must provide communication with ultra-low latency and ultra-high reliability. For example, a service supporting URLLC must satisfy an air interface latency of less than 0.5ms, and also requires a packet error rate of 10-5 or less. Therefore, for the services supporting URLLC, 5G and 6G systems require designs to provide a transmit time interval (TTI) shorter than those of other services, and also assign a large number of resources in a frequency band. However, the above-described mMTC, URLLC, and eMBB are merely examples of different types of services, and service types to which the disclosure is applied are not limited to the above examples.

Furthermore, in 5G and 6G communicaation systems, a base station and a UE may activate or deactivate all or part of base station and UE antennas for the purpose of improving performance and reducing power consumption (increasing energy efficiency). In general, it may be expected that increases in the number of base station and UE antennas lead to improvements of transmission/reception performance. Contrarily, it may be expected that decreases in the number of base station and UE antennas lead to reduction of power consumption of each of the base station and the UE.

As energy efficiency enhancement is considered as a very important metric in next-generation communication systems such as 5G and 6G, a base station and a UE may more dynamically operate antenna activation and deactivation for power consumption reduction. However, the operation of a base station deactivating a base station antenna to reduce power consumption may result in an environment where it is difficult to deactivate a UE antenna on a UE side due to the attenuation of link performance. Conversely, the operation of a UE deactivating a UE antenna to reduce power consumption may result in an environment where it is difficult to deactivate a base station antenna on a base station side due to the attenuation of link performance.

Therefore, the disclosure proposes various operation methods between a base station and a UE for activation and deactivation of base station and UE antennas in a wireless communication system. It is expected that the energy efficiency of the base station and the UE will be improved through the antenna configuration method proposed in the disclosure.

The services considered in the 5G and 6G communication systems described above may be provided by converging with one another based on a single framework. That is, for efficient resource management and control, each service may be integrated into a single system to be controlled and transmitted.

Hereinafter, the frame structure of LTE, LTE-A, LTE-A Pro, and 5G NR systems will be described in more detail with reference to the drawings. It should be noted that the frame structure may also be applied to a 6G system.

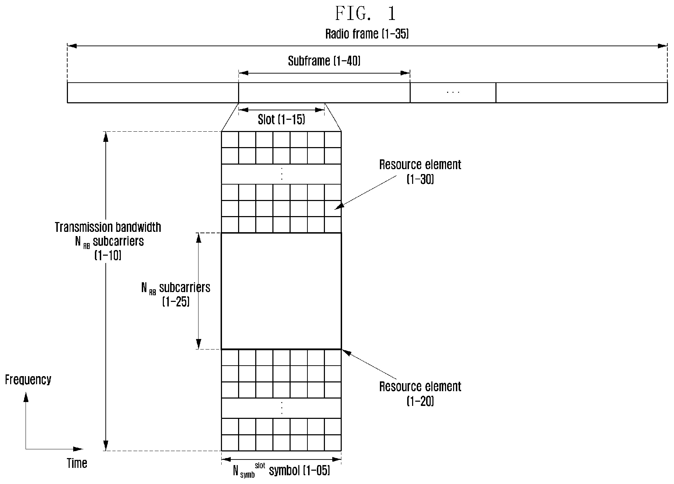

FIG. 1 illustrates a basic structure of a time-frequency resource domain according to an embodiment of the disclosure. Specifically, FIG. 1 illustrates a basic structure of a time-frequency resource domain that is a radio resource domain for transmitting the data channel or control channel in the LTE, LTE-A, LTE-A Pro, and 5G NR systems based on a cyclic prefix (CP) OFDM (CP-OFDM) or SC-FDMA waveform. In FIG. 1, the horizontal axis represents the time domain, and the vertical axis represents the frequency domain.

In LTE, LTE-A, LTE-A Pro, and 5G NR systems, the minimum transmission unit in the time domain is an OFDM symbol or an SC-FDMA symbol, and N_{symb}^{slot} 1-05 symbols may be grouped to configure one slot 1-15. In the case of LTE, LTE-A, and LTE-A Pro, two slots each having 7 symbols may be combined to configure one subframe 1-40. According to some embodiments, N_{symb}^{slot} may be determined according to the length of a cyclic prefix (CP) additionally added for inter-symbol interference prevention for each symbol and, for example, in 5G NR, if a normal CP is applied, N_{symb} = 14, and if an extended CP is applied, N_{symb} = 12. The extended CP may be applied to a system having a relatively large radio wave transmission distance, thereby maintaining orthogonality between symbols. In addition, according to some embodiments, 5G NR may support two types of slot structures, namely a slot and a mini-slot (or nonslot). In LTE and LTE-A, the length of a slot is 0.5ms, and the length of a subframe is fixed to 1.0ms, but in the 5G NR system, the length of a slot or a mini-slot (transmission of a time unit smaller than a slot) may vary depending on the subcarrier spacing. In LTE, LTE-A, and LTE-A Pro, the minimum transmission unit in the frequency domain is a subcarrier (subcarrier spacing = 15kHz) in units of 15 kHz, and the total bandwidth of the entire system transmission bandwidth is composed of a total of NBW 1-10 subcarriers. A flexible extended frame structure of the 5G NR system will be described later.

The basic unit of resources in the time-frequency domain is a resource element (RE) 1-30, which may be represented by an OFDM symbol or SC-FDMA symbol index and a subcarrier index. A resource block (RB) 1-20 or a physical resource block (PRB) may be defined by N_{symb}^{slot} 1-05 consecutive OFDM symbols or SC-FDMA symbols in a time domain and N_{RB} 1-25 consecutive subcarriers in a frequency domain. Therefore, one RB 1-20 is composed of N_{symb}×N_{RB} REs 1-30. Data is mapped in RB units, and the base station performs scheduling in RB units for a specific UE.

According to some embodiments, the subcarrier spacing, CP length, and the like are information essential for OFDM transmission and reception, and smooth transmission and reception may be possible only if the base station and the UE recognize them as common values.

The frame structures of LTE and LTE-A systems described above are designed for conventional voice/data communication, and thus face limitations in scalability when trying to satisfy the diverse services and requirements of 5G NR systems. Therefore, in 5G and 6G systems, it is necessary to define and operate a frame structure flexibly in consideration of various services and requirements.

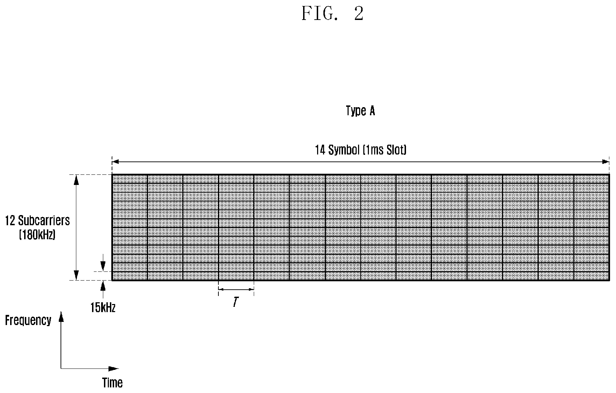

FIGS. 2, 3, and 4 illustrate an extended frame structure according to an embodiment of the disclosure.

The examples of FIGS. 2, 3, and 4 may include a subcarrier spacing, a CP length, a slot length, and the like as an essential parameter set defining an extended frame structure. In 5G and 6G systems, the basic time unit for performing scheduling may be a slot.

In the early stages of introducing a new system (e.g., 6G), coexistence or dual-mode operation with existing systems (e.g., LTE/LTE-A/LTE-A Pro, NR) is expected. Through this, the existing system may provide a stable system operation, and the new system may perform a role of providing an improved service. Therefore, the extended frame structure of the new system needs to include at least the frame structure or the essential parameter set of the existing system. Referring to FIG. 2, a 5G NR frame structure or an essential parameter set such as the frame structure of LTE/LTE-A/LTE-A Pro is shown. The frame structure type A illustrated in FIG. 2 shows that the subcarrier spacing is 15kHz, 14 symbols configure one 1ms slot, and 12 subcarriers (=180kHz = 12 x 15kHz) configure one physical resource block (PRB).

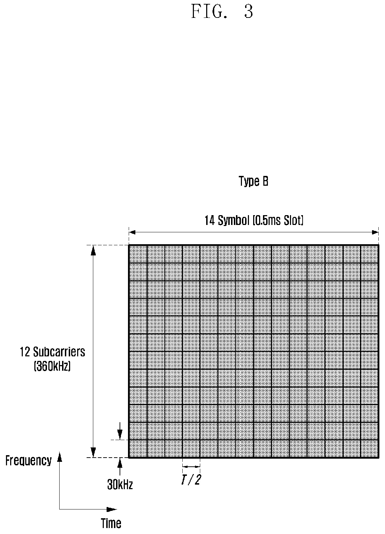

Referring to FIG. 3, the frame structure type B illustrated in FIG. 3 shows that the subcarrier spacing is 30kHz, 14 symbols configure one 0.5ms slot, and 12 subcarriers (=360kHz = 12 x 30kHz) configure one physical resource block (PRB). That is, the subcarrier spacing and the PRB size are twice as large as those of the frame structure type A, and the slot length and the symbol length are twice as small as those of the frame structure type A.

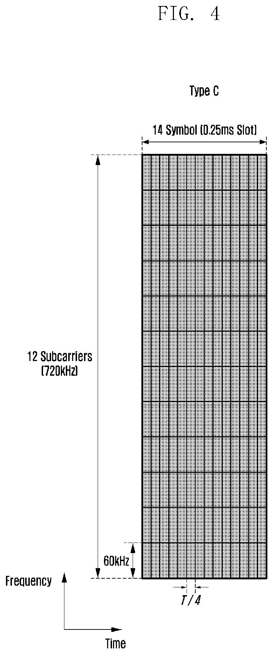

Referring to FIG. 4, the frame structure type C illustrated in FIG. 4 shows that the subcarrier spacing is 60kHz, 14 symbols configure one 0.25ms slot, and 12 subcarriers (=720kHz = 12 x 60kHz) configure one physical resource block (PRB). That is, the subcarrier spacing and the PRB size are four times larger than those of the frame structure type A, and the slot length and the symbol length are four times smaller than those of the frame structure type A.

That is, by generalizing the frame structure types, high scalability may be provided by ensuring that the essential parameter sets, such as the subcarrier spacing, CP length, slot length, and the like, have an integer multiple relationship with each other for each frame structure type. In addition, a fixed-length subframe of 1ms may be defined to represent a reference time unit independent of the frame structure type. Therefore, one subframe consists of one slot in frame structure type A, one subframe consists of two slots in frame structure type B, and one subframe consists of four slots in frame structure type C. It is obvious that the extendable frame structure is not limited to the frame structure types A, B, or C described above but may be applied to other subcarrier spacings, such as 120 kHz and 240 kHz, and may have a different structure.

According to some embodiments, the frame structure types described above may be applied to various scenarios. From the perspective of cell size, since a longer CP length allows for the support of larger cells, frame structure type A may support relatively larger cells compared to frame structure types B and C. From the perspective of operating frequency band, since a larger subcarrier spacing is advantageous for recovering phase noise in the high-frequency band, frame structure type C may support relatively higher operating frequencies compared to frame structure types A and B. From the perspective of service, since a shorter subframe length is advantageous for supporting ultra-low latency services such as URLLC, frame structure type C is relatively more suitable for URLLC services compared to frame structure types A and B. In addition, multiple frame structure types may be multiplexed and integrally operated within a single system.

Next, the antenna configuration and transmission/reception methods of the base station and the UE in a 5G NR system will be described in detail. It is noted that the corresponding method and structure may also be applied to a 6G system.

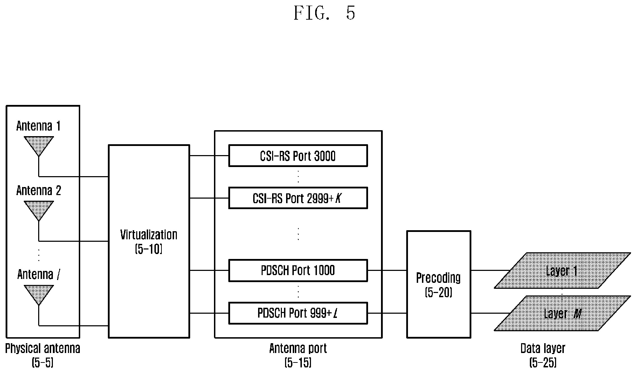

FIG. 5 illustrates a physical antenna, an antenna port, and a layer for a base station downlink according to an embodiment of the disclosure.

Each of the base station antenna ports 5-15 in FIG. 5 indicates a virtualization 5-10 of one or multiple physical antennas 5-5. In LTE/LTE-A/LTE-A Pro/NR systems, a transmission antenna port is allocated for data, control signal, and reference signal (RS) transmission. It is noted that a similar method may also be applied to a 6G system.

For example, ports 1000, 1001, ... may be allocated for downlink data (or physical downlink shared channel (PDSCH)) transmission in the downlink, ports 3000, 3001, ... may be allocated for channel state information reference signal (CSI-RS) transmission, and ports 2000, 2001, ... may be allocated for downlink control signal (or physical downlink control channel (PDCCH)) transmission.

The base station may perform precoding 5-20 on at least one layer 5-25 including independent data, and then transmit the same through a PDSCH port. Whether the data transmitted through multiple layers from the receiver may be decoded without error depends on the number of transmission antenna ports, the number of reception antenna ports, and the channel state. Therefore, in order to determine the number of layers, the base station may consider the number of reception antenna ports, the number of transmission antenna ports, channel state information (CSI), and the size of the transmission data. The downlink antenna/port configuration and transmission/reception methods described above may be similarly used in the uplink.

In determining the number of layers and the precoding matrix for PDSCH transmission, the base station may use downlink channel state information. According to some embodiments, the UE obtains the downlink channel state information by measuring a CSI-RS transmitted by the base station and reports the measured channel state information to the base station.

Next, the process of channel state information measurement and reporting between the base station and the UE in a 5G NR system will be described in detail. It is noted that the corresponding method and structure may also be applied to a 6G system.

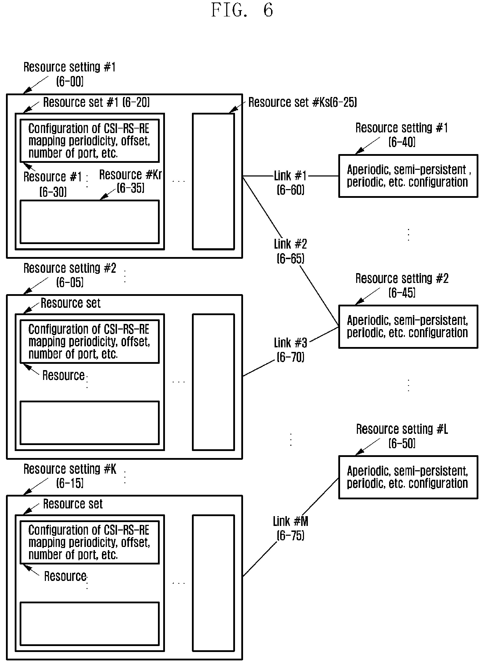

FIG. 6 is a diagram illustrating a channel state information framework in a 5G NR system according to an embodiment of the disclosure. The CSI framework of the NR in FIG. 6 is composed of two elements, which are a resource setting and a report setting, and the report setting may configure at least one link between the two by referencing the ID of the resource setting.

According to some embodiments, the resource setting may be an element including reference signal-related information, and the base station may configure at least one of resource settings 6-00, 6-05, and 6-15 to the UE. Each resource setting may include at least one of resource sets 6-20 and 6-25.

Each resource set may include at least one of resources 6-30 and 6-35. Each of the resources 6-30 and 6-35 may include detailed information on the RS, for example, the RE location information in which the RS is transmitted, the RS transmission periodicity and offset in the time axis, and the number of ports of the RS.

According to some embodiments, the report setting is an element including information related to a CSI reporting method, and the base station may configure at least one of report settings 6-40, 6-45, and 6-50 to the UE. In this case, each report setting may include information on report transmission characteristics such as aperiodic, semi-persistent, and periodic, the channel (e.g., whether it is a physical uplink shared channel (PUSCH) or a physical uplink control channel (PUCCH)) through which the report is transmitted, and channel information (e.g., the number of ranks, a precoding matrix index, and a channel quality indicator (CQI)) to be reported. In this case, the report setting has at least one ID for referencing information on a channel that the UE refers to during the CSI report or a reference signal (or RE location) for interference measurement, and this is illustrated as links 6-60, 6-65, 6-70, and 6-75.

According to some embodiments, if the link 6-60 connects one reporting setting 6-40 and one resource setting 6-00, the resource setting 6-00 may be used for a channel measurement. If the links 6-65 and 6-70 connect one reporting setting 6-45 and two resource settings 6-00 and 6-05, one of the two resource settings may be used for a channel measurement, and the remaining resource setting may be used for an interference measurement.

According to some embodiments, each resource setting may include resource transmission characteristic information such as aperiodic, semi-persistent, or periodic.

According to some embodiments, each resource set within a resource setting may be configured with information including the values listed below through the higher layer. However, it is not limited to the examples below.
- repetition: Information on a spatial domain transmission filter for resources within a resource set
- trs-Info: Information on whether resources within a resource set are used as tracking RS (TRS) for time/frequency tracking

If the repetition is "ON", the UE may recognize that the same spatial domain transmission filter is applied to all resources belonging to the resource set (i.e., the UE may assume that the base station uses the same transmission beam) and that each resource has the same number of ports and periodicity. If the repetition is "OFF", the UE cannot assume that the same spatial domain transmission filter is applied to all the NZP CSI-RS resources belonging to the resource set (i.e., the UE cannot assume that the same transmission beam is used by the base station), and the UE cannot recognize that each resource has the same number of ports and periodicity.

The NZP CSI-RS may be the most representative reference signal configured in a resource set, and with regard to each CSI-RS, information including the following values may be configured through the higher layer. However, it is not limited to the examples below.
- periodicityAndOffset: Transmission periodicity and slot offset of the corresponding CSI-RS resource
- CSI-RS-resourceMapping: The OFDM symbol location within the slot and subcarrier location within the PRB of the corresponding CSI-RS resource
- nrofPorts: The number of CSI-RS ports included in the CSI-RS resource
- density: The frequency density of the corresponding CSI-RS
- cdm-Type: CDM length and CDM RE pattern of the corresponding CSI-RS
- powerControlOffset: Ratio between PDSCH Energy Per RE (EPRE) and NZP CSI-RS EPRE
- powerControlOffsetSS: Ratio between SS/PBCH block EPRE and NZP CSI-RS EPRE

According to some embodiments, in 5G NR, one of {1, 2, 4, 8, 12, 16, 24, 32} CSI-RS port numbers may be configured to one CSI-RS resource, and different configuration degrees of freedom are supported depending on the number of CSI-RS ports configured in the CSI-RS resource. Table 1 shows the CSI-RS density, CDM length and type, frequency axis and time axis starting location (*k̅*, *l̅*) of the CSI-RS component RE pattern, the number of frequency axis REs (k') and the number of time axis REs (l') of the CSI-RS component RE pattern, which may be configured according to the number of NR CSI-RS ports (X).

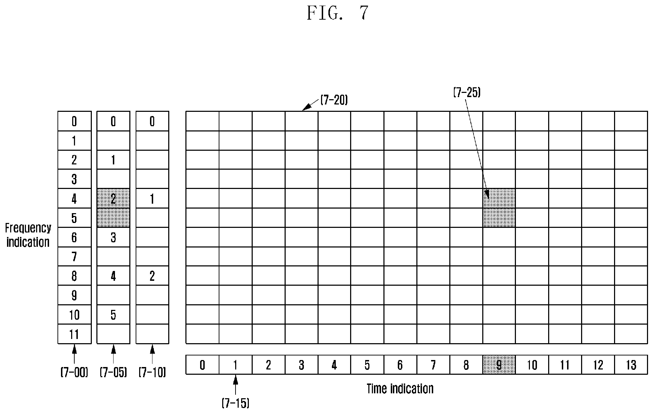

FIG. 7 illustrates an example of CSI-RS RE designation by CSI-RS resource mapping according to an embodiment of the disclosure. It is noted that the corresponding method and structure may also be applied to a 6G system.

According to some embodiments, the CSI-RS component RE pattern is a basic unit that constitutes a CSI-RS resource and may be composed of a total of YZ REs including (Y = 1 + max(*k*')) REs adjacent on the frequency axis and (Z =1 + max(*l*')) REs adjacent on the time axis. Referring to Table 1, the NR supports different frequency axis configuration freedoms according to the number of CSI-RS ports configured in the CSI-RS resource. In the case of one port, the configuration may be made without any subcarrier restriction inside the PRB, and the CSI-RS RE location may be specified by a 12-bit bitmap 7-00. When the number of ports is {2, 4, 8, 12, 16, 24, 32} and Y=2, it is possible to configure every two subcarriers in the PRB, and the CSI-RS RE location may be specified by a 6-bit bitmap 7-05. When the number of ports is 4 and Y=4, it is possible to configure every four subcarriers in the PRB, and the CSI-RS RE location may be specified by a 3-bit bitmap 7-10. Similarly, in the case of the time axis RE location, the CSI-RS RE location may be specified by a total of 14-bit bitmap. In this case, the length of the bitmap may change as in the above frequency location designation according to the Z value in Table 1, but the principle is similar to the above description, and thus a detailed description thereof will be omitted.

For example, if X=2 is configured as the port and Y=2 and Z=1, the base station specifies the frequency axis RE location by 7-05, if the frequency axis subcarrier location is specified by 2 of 7-05 and the time axis OFDM symbol location is specified by 9 of 7-15, based on this, the UE may recognize that a CSI-RS is transmitted at an RE location 7-25 in the corresponding PRB 7-20.

**[Table 1] CSI-RS locations within a slot**

| Row | Ports *X* | Density *ρ* | *cdm-Type* | (*k̅,l̅*) | CDM group index *j* | *k'* | *l*' |
|---|---|---|---|---|---|---|---|
| 1 | 1 | 3 | No CDM | (*k*₀,*l*₀), (*k*₀ + 4,*l*₀), (*k*₀ + 8,*l*₀) | 0,0,0 | 0 | 0 |
| 2 | 1 | 1, 0.5 | No CDM | (*k*₀*,l*₀) | 0 | 0 | 0 |
| 3 | 2 | 1, 0.5 | FD-CDM2 | (*k*₀,*l*₀) | 0 | 0, 1 | 0 |
| 4 | 4 | 1 | FD-CDM2 | (*k*₀,*l*₀),(*k*₀ + 2,*l*₀) | 0,1 | 0, 1 | 0 |
| 5 | 4 | 1 | FD-CDM2 | (*k*₀,*l*₀),(*k*₀,*l*₀ +1) | 0,1 | 0, 1 | 0 |
| 6 | 8 | 1 | FD-CDM2 | (*k*₀*,l*₀),(*k*₁,*l*₀),(*k*₂,*l*₀),(*k*₃,*l*₀) | 0,1,2,3 | 0, 1 | 0 |
| 7 | 8 | 1 | FD-CDM2 | (*k*₀,*l*₀),(*k*₁,*l*₀),(*k*₀,*l*₀ + 1),(*k*₁,*l*₀ + 1) | 0,1,2,3 | 0, 1 | 0 |
| 8 | 8 | 1 | CDM4 (FD2,TD2) | (*k*₀,*l*₀),(*k*₁,*l*₀) | 0,1 | 0, 1 | 0, 1 |
| 9 | 12 | 1 | FD-CDM2 | (*k*₀,*l*₀),(*k*₁,*l*₀),(*k*₂,*l*₀),(*k*₃,*l*₀),(*k*₄,*l*₀),(*k*₅,*l*₀) | 0,1,2,3,4,5 | 0, 1 | 0 |
| 10 | 12 | 1 | CDM4 (FD2,TD2) | (*k*₀,*l*₀),(*k*₁,*l*₀),(*k*₂,*l*₀) | 0,1,2 | 0, 1 | 0, 1 |
| 11 | 16 | 1, 0.5 | FD-CDM2 | (*k*₀,*l*₀),(*k*₁,*l*₀),(*k*₂,*l*₀),(*k*₃,*l*₀) (*k*₀,*l*₀ + 1),(*k*₁,*l*₀ + 1),(*k*₂,*l*₀ + 1),(*k*₃,*l*₀ + 1) | 0,1,2,3, 4,5,6,7 | 0, 1 | 0 |
| 12 | 16 | 1, 0.5 | CDM4 (FD2,TD2) | (*k*₀,*l*₀),(*k*₁,*l*₀),(*k*₂,*l*₀),(*k*₃,*l*₀) | 0,1,2,3 | 0, 1 | 0, 1 |
| 13 | 24 | 1, 0.5 | FD-CDM2 | (*k*₀,*l*₀),(*k*₁,*l*₀),(*k*₂,*l*₀),(*k*₀,*l*₀ + 1),(*k*₁,*l*₀ +1),(*k*₂,*l*₀ + 1) (*k*₀,*l*₃),(*k*₁,*l*₁),(*k₂*,*l*₁),(*k*₀,*l*₁ +1),(*k*₁,*l*₁ + 1),(*k*₂,*l*₁ + 1) | 0,1,2,3,4,5, 6,7,8,9,10,11 | 0, 1 | 0 |
| 14 | 24 | 1, 0.5 | CDM4 (FD2,TD2) | (*k*₀,*l*₀),(*k*₁,*l*₀),(*k*₂,*l*₀),(*k*₀,*l*₁),(*k*₁,*l*₁),(*k*₂,*l*₁) | 0,1,2,3,4,5 | 0, 1 | 0, 1 |
| 15 | 24 | 1, 0.5 | CDM8 (FD2,TD4) | (*k*₀,*l*₀),(*k*₁,*l*₀),(*k*₂,*l*₀) | 0,1,2 | 0, 1 | 0, 1, 2, 3 |
| 16 | 32 | 1, 0.5 | FD-CDM2 | (*k*₀,*l*₀),(*k*₁,*l*₀),(*k*₂,*l*₀),(*k*₃,*l*₀), (*k*₀,*l*₀ + 1),(*k*₁,*l*₀ + 1),(*k*₂,*l*₀ + 1),(*k*₃,*l*₀ + 1), (*k*₀,*l*₁),(*k*₁,*l*₁),(*k*₂,*l*₁),(*k*₃,*l*₁), (*k*₀,*l*₁ + 1),(*k*₁,*l*₁ +1),(*k*₂,*l*₁ + 1),(*k*₃,*l*₁ + 1) | 0,1,2,3, 4,5,6,7, 8,9,10,11, 12,13,14,15 | 0, 1 | 0 |
| 17 | 32 | 1, 0.5 | CDM4 (FD2,TD2) | (*k*₀,*l*₀),(*k*₁,*l*₀),(*k*₂,*l*₀),(*k*₃,*l*₀),(*k*₀,*l*₁),(*k*₁,*l*₁),(*k*₂,*l*₁),(*k*₃,*l*₁) | 0.1,2.3,4,5,8,7 | 0, 1 | 0, 1 |
| 18 | 32 | 1, 0.5 | CDM8 (FD2.TD4) | (*k*₀,*l*₀),(*k*₁,*l*₀),(*k*₂,*l*₀),(*k*₃,*l*₀) | 0,1,2,3 | 0,1 | 0,1, 2, 3 |

According to some embodiments, the base station may schedule a PDSCH to the UE after considering the channel state information and the size of data to be transmitted to the UE, and then notify the UE of scheduling information through downlink control information (DCI). The notified DCI may include the number of layers of scheduled downlink data and a location in the frequency-time axis. Next, the DCI notified by the base station to the UE when downlink data is scheduled in a 5G NR system is described in detail. It is noted that the corresponding method and structure may also be applied to a 6G system.

In the NR system, scheduling information regarding a PUSCH is transferred from a base station to a UE through DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a PDCCH. A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information, for example.

**[Table 2]**

| | |
|---|---|
| - Identifier for DCI formats - 1 bit | |
| - Frequency domain resource assignment | |
| - Time domain resource assignment - 4 bits | |
| - VRB-to-PRB mapping - 1 bit. | |
| - Modulation and coding scheme - 5 bits | |
| - New data indicator - 1 bit | |
| -Redundancy version - 2 bits | |
| - HARQ process number - 4 bits | |
| - Downlink assignment index - 2 bits | |
| - TPC command for scheduled PUCCH - 2 bits | |
| - PUCCH resource indicator - 3 bits | |
| - PDSCH-to-HARQ_feedback timing indicator - 3 bits | |

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information, for example.

**[Table 3]**

| | |
|---|---|
| - Identifier for DCI formats - 1 bits | |
| - Carrier indicator - 0 or 3 bits | |
| - Bandwidth part indicator - 0, 1 or 2 bits | |
| - Frequency domain resource assignment | |
| - Time domain resource assignment - 0, 1, 2, 3, or 4 bits | |
| - VRB-to-PRB mapping - 0 or 1 bit | |
| - PRB bundling size indicator (Physical resource block bundling size indicator) - 0 or 1 bit | |
| - Rate matching indicator (Rate matching indicator) - 0, 1, or 2 bits | |
| - ZP CSI-RS trigger (zero power channel state information reference signal trigger) - 0, 1, or 2 bits | |
| For transport block 1(For transport block 1): | |
| | - Modulation and coding scheme - 5 bits |
| | - New data indicator - 1 bit |
| | - Redundancy version - 2 bits |
| For transport block 2(For transport block 2): | |
| | - Modulation and coding scheme - 5 bits |
| | |
| | - New data indicator - 1 bit |
| | - Redundancy version - 2 bits |
| - HARQ process number - 4 bits | |
| - Downlink assignment index - 0 or 2 or 4 bits | |
| - TPC command for scheduled PUCCH - 2 bits | |
| - PUCCH resource indicator - 3 bits | |
| - PDSCH-to-HARQ_feedback timing indicator - 0, 1, 2, 3 bits | |
| - Antenna ports - 4, 5 or 6 bits | |
| - Transmission configuration indication (Transmission configuration indication) - 0 or 3 bits | |
| - SRS request - 2 bits | |
| - CBG transmission information - 0, 2, 4, 6, or 8 bits | |
| - CBG flushing out information (Code block group flushing out information) - 0 or 1 bit | |
| - DMRS sequence initialization - 1 bit | |

Through item "antenna ports" in Table 3, the base station may notify the UE of a demodulation reference signal (DMRS) port for scheduled data decoding. For example, in case that the DMRS type is configured as "type 1" and the number of DMRS symbols is configured as "1" via higher layer signaling, for exmaple, RRC signaling, DMRS port(s) corresponding to the respective codepoints of item "antenna ports" in the DCI are as given in Table 4 below.

**[Table 4]**

| Value | Number of DMRS CDM group(s) without data | DMRS port(s) |
|---|---|---|
| 0 | 1 | 0 |
| 1 | 1 | 1 |
| 2 | 1 | 0, 1 |
| 3 | 2 | 0 |
| 4 | 2 | 1 |
| 5 | 2 | 2 |
| 6 | 2 | 3 |
| 7 | 2 | 0, 1 |
| 8 | 2 | 2, 3 |
| 9 | 2 | 0-2 |
| 10 | 2 | 0-3 |
| 11 | 2 | 0, 2 |
| 12-15 | Reserved | Reserved |

According to some embodiments, the UE may expect that there are as many PDSCH layers as there are DMRS ports corresponding to the codepoints of the antenna ports item on the DCI and decode the data of each layer using the DMRS as a reference.

In order for the UE to successfully receive multiple layer PDSCHs, the UE should have at least the same number of or a larger number of reception antenna ports as the number of layers. If the base station knows the maximum number of layers that the UE may receive or the number of reception antennas of the UE, the maximum number of PDSCH transmission layers may be determined accordingly. According to some embodiments, the UE may report the maximum number of layers nₘₐₓ that the UE may receive to the base station through a UE capability report before completing an RRC connection setup.

As described above, the number of layers of the PDSCH to be received by the UE is notified by DCI, and this may be changed dynamically. Therefore, in order to successfully receive a PDSCH, the UE must always activate the number of reception antenna ports corresponding to the number of layers nₘₐₓ reported to the base station during the UE capability reporting.

As described above, in general, it is expected that the transmission/reception performance may be improved as the number of the base station antennas and the UE antennas increases. Conversely, when the number of base station antennas and UE antennas is reduced, a reduction in power consumption at the base station and the UE may be expected. In the disclosure, the number of antennas may mean the number of physical antennas, and may mean the number of antenna ports. Note that for the sake of description, the number of antenna ports is generally expressed in the following embodiments, but may be replaced by other terms having a similar meaning.

In a next-generation communication system, energy efficiency improvement is an important indicator, and thus the base station and the UE need to operate antenna activation and deactivation more dynamically for the purpose of reducing power consumption. For example, even though the transmission/reception performance is guaranteed, if a large number of transmission/reception antenna ports are operated, unnecessary power may be consumed. In particular, in a 6G system, more ports than the maximum CSI-RS port number (32 ports) of the current 5G NR system may be supported. In addition, a larger number of antenna ports than the current 5G NR system UE antenna port number requirement (4 ports) may be required.

If the UE and the base station want to activate/deactivate some of the antenna ports for the purpose of reducing power consumption or the like, it may be necessary to notify and indicate related information between the base station and the UE. Various embodiments of the disclosure regarding specific operational methods in the higher and physical layers for supporting the same are described below. It is expected that the base station and the UE will be able to ensure transmission/reception performance between each other and also improve energy efficiency in the base station and the UE, respectively, through the antenna configuration method proposed in the disclosure.

It is to be noted that, in the disclosure, one or more of the following embodiments may be combined and used.

As used hereinafter, a base station is an entity that allocates resources to terminals, and may be at least one of a gNode B, a gNB, an eNode B, a Node B, a base station (BS), a wireless access unit, a base station controller, or a node on a network. A terminal may include a user equipment (UE), a mobile station (MS), a cellular phone, a smartphone, a computer, or a multimedia system capable of performing communication functions.

Furthermore, in describing the disclosure, a detailed description of known functions or configurations incorporated herein will be omitted when it is determined that the description may make the subject matter of the disclosure unnecessarily unclear. Also, the terms which will be described below are terms defined in consideration of the functions in the disclosure, and may be different according to users, intentions of the users, or customs. Accordingly, the definitions thereof should be made based on the contents throughout the specification.

In the following description of the disclosure, higher layer signaling may refer to signaling corresponding to at least one signaling among the following signaling, or a combination of one or more thereof.
- Master information block (MIB)
- System information block (SIB) or SIB X (X=1, 2, ...)
- Radio resource control (RRC)
- Medium access control (MAC) control element (CE)

In addition, L1 signaling may refer to signaling corresponding to at least one signaling method among signaling methods using the following physical layer channel or signaling, or a combination of one or more thereof.
- Physical downlink control channel (PDCCH)
- Downlink control information (DCI)
- UE-specific DCI
- Group common DCI
- Common DCI
- Scheduling DCI (for example, DCI used for the purpose of scheduling downlink or uplink data)
- Non-scheduling DCI (for example, DCI not used for the purpose of scheduling downlink or uplink data)
- Physical uplink control channel (PUCCH)
- Uplink control information (UCI)

As used hereinafter, determining a priority between A and B may refer to various operations such as selecting one having a higher priority according to a pre-determined priority rule and performing an operation corresponding to the selected one, omitting or dropping an operation corresponding to one having a lower priority, and the like. As used herein, the term "drop" may be replaced by any other term having a similar meaning. For example, the "drop" may be replaced by the term "cancel", "omit", or the like.

In the description of the dislcosure, unless specially mentioned otherwise, the term "channel state" may be interchangeably used with the term "channel state information".

In the description of the disclosure, "a/b" may refer to at least one of a or b.

### <First Embodiment>

In the first embodiment, an environment in which a base station and a UE are equipped with multiple antennas is considered. In the first embodiment, a method of activating/deactivating some of the antenna ports is considered by simultaneously considering the transmission/reception performance between the base station and the UE and power consumption reduction (energy efficiency improvement). In addition, in the first embodiment, the entire procedure including notification and indication of information between the base station and the UE related to the operation for supporting the same is proposed.

In the disclosure, the following elements may be considered in determining whether to activate a base station antenna and a UE antenna. However, it should be noted that in the disclosure, the elements for determining whether to activate the base station antenna and UE antenna are not limited to those below. The following elements may all be considered or at least some of them may be considered.
* Base station antenna operating information
* UE antenna operating information
* Channel state information (CSI) between base station and UE
* Power amount of UE
* Power amount of base station

The UE may report one or more of the above-listed elements to the base station, and the base station may provide one or more of the above-listed elements to the UE. The base station may determine whether to activate the UE antenna and base station antenna by comprehensively considering the information reported by the UE and the information already known, such as the base station configuration parameters. The base station may explicitly transmit the antenna activation signals of the UE and the base station to the UE through a downlink control channel. The base station may implicitly inform the UE of the UE antenna activation information through a method such as a component carrier, frequency, or time resource allocation. It is noted that the number of reception antennas of the UE should be the same as or greater than the maximum number of layers transmitted by the base station.

In the disclosure, when the base station provides information related to antenna activation/deactivation to the UE, the notification and instruction of the related information may be provided in the form of radio resource control (RRC), MAC control element (MAC-CE), downlink control information (DCI), or the like. In addition, when the UE provides information related to antenna activation/deactivation to the base station, the notification and indication of the related information may be provided in the form of radio resource control (RRC), a MAC control element (MAC-CE), and uplink control information (UCI). When the base station transmits information related to antenna activation/deactivation to the UE, at least some of RRC, MAC-CE, and DCI or a combination thereof may be used. When the UE transmits information related to antenna activation/deactivation to the base station, at least one or a combination of at least some of RRC, MAC-CE, and UCI may be used.

Specifically, the base station may indicate the base station antenna operating information to the UE among the elements.

The base station antenna operating information may be information on the maximum number of layers transmitted by the base station. The base station may determine and configure information on the maximum number of layers and provide the same to the UE, which may help to determine whether to activate the UE reception antenna. As described above, since the number of reception antennas of the UE must be the same as or greater than the maximum number of layers transmitted by the base station, the UE may determine the maximum number of reception antennas to be activated when the information on the maximum number of layers is provided to the UE.

In contrast, the base station antenna operating information may be information on the number of antennas that the base station may adjust and configure. The base station may determine base station antenna information and provide the same to the UE, and the UE may use this information to report the channel state between the base station and the UE for the base station antenna information. For more details, reference is made to the following embodiments.

In contrast, the base station antenna operating information may be information on the number of base station antenna layers currently transmitted. It will be possible to determine the number of antenna layers within the maximum layer number provided by the base station to the UE, based on the channel state between the base station and the UE.

Specifically, the UE may report the antenna operating information of the UE to the base station among the above elements.

The UE antenna operating information may be capability information of the UE regarding antenna operations. The UE antenna operating information may be information on the maximum number of layers that the UE may receive. When the UE provides information on the maximum number of layers that the UE may receive to the base station, the base station may refer to the same and then indicate information on the maximum number of layers that the base station transmits to the UE. If the UE wants to reduce power consumption by deactivating the reception antenna, the UE may request the base station to adjust the maximum number of layers transmitted by the base station. This may be achieved by receiving information on the maximum number of layers transmitted by the base station and notifying the base station that the UE cannot support the corresponding operation.

In contrast, the UE antenna operating information may be information on the maximum number of reception antennas (number of ports) of the UE. For more details, reference may be made to the following embodiments.

The UE antenna operating information may be information that allows the base station to dynamically change the UE reception antenna operation. In this case, the base station may determine and configure whether to activate or deactivate the operation and may indicate and notify the UE thereof. For more details, reference is made to the following embodiments.

Specifically, the UE may report the power amount information of the UE to the base station among the above elements. Here, the power amount information of the UE may include various pieces of information related to the UE's power. For example, the power amount information of the UE may be information related to the remaining power amount (e.g., battery capacity) of the UE. For another example, the power amount information of the UE may be information related to a power amplifier (PA). Specifically, the power amount information of the UE may be information on the number of PAs present in the UE and/or information on the number of currently activated PAs.

Specifically, the base station may indicate the power amount information of the base station to the UE among the elements. The power amount information of the base station may include various pieces of information related to the base station's power. For example, the power amount information of the base station may include information on whether a power consumption reduction operation of the base station is performed.

### <Second Embodiment>

In the second embodiment, an environment in which a base station and a UE are equipped with multiple antennas is considered. In the second embodiment, one or more antenna sets are defined for base station and UE antennas for a method of activating/deactivating some of the antenna ports.

First, antenna sets for a base station and a UE antenna may be defined. That is, one or more antenna sets may be defined for the base station and UE antennas. In addition, each antenna set may be configured with a different number of antenna ports. This is for the sake of description and does not limit the disclosure to the above-mentioned specific term names. That is, it should be noted that the terms for the antenna set may be replaced by other terms having similar meanings. For example, the term "antenna subset" may be used. When the term "antenna subset" is used, a case in which the number of antenna ports is smaller than the number of currently activated antenna ports may be named as an antenna subset. In the description of the embodiment, the term "antenna set" is used.

The number of antenna sets of the base station and the UE is defined as follows.
* X: Number of base station antenna sets
** X may be ≥1, and when multiple antenna sets are defined, each antenna set may be configured by different antenna ports and port numbers, and each antenna set may have a different priority value. Here, the antenna port may indicate a CSI-RS antenna port. The UE may report information related to X to the base station as the UE capability information. Information related to X may be information on CSI report that the UE may process.
* Y: Number of UE antenna sets
** Y may be ≥1, and when multiple antenna sets are defined, each antenna set may be configured by different antenna ports and port numbers, and each antenna set may have a different priority value. Here, the antenna port may indicate a reception antenna port of the UE. The number of antenna ports defined for each antenna set should be equal to or larger than the maximum number of layers transmitted by the base station. The UE may report information related to Y to the base station as the UE capability information. Information related to Y may be information on CSI report that the UE may process.

### <Third Embodiment>

In the third embodiment, an environment in which a base station and a UE are equipped with multiple antennas is considered. In the third embodiment, a method is proposed for a UE to report channel state information (CSI) between the base station and the UE on the base station antenna information for a method of activating/deactivating some of the antenna ports.

First, refer to the definition of the antenna set for the base station and UE antennas in the second embodiment. The definition of the antenna set for the base station and UE antennas in the second embodiment may be applied to the third embodiment.

The UE may report CSI for X (≥1) and Y (≥1) to the base station.

In this embodiment, Y (≥1) may be determined by the UE. In addition, the number of UE antenna ports configured in the Y sets may be reported to the base station as CSI.

In this case, if Y=1 is determined, the number of UE antenna ports may not be reported to the base station. In the case of Y>1, the base station may determine the number of antenna ports of the UE based on information on antenna activation/deactivation and indicate the same to the UE. In this case, the method of indicating the same may be variously supported by RRC, MAC-CE, or DCI, or a combination thereof. On the other hand, for reducing power consumption (improving energy efficiency), the dynamic indication method through the MAC-CE or DCI may be more advantageous.

In contrast, in the case of Y=1, there may be no need for the base station to determine and indicate the number of antenna ports of the UE. Therefore, in this case, the base station may indicate only the information on the maximum number of layers transmitted by the base station to the UE, as described in the first embodiment.

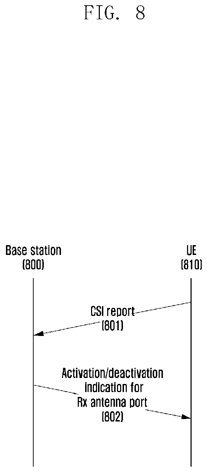

FIG. 8 illustrates an example of a method for activating/deactivating some of antenna ports of a UE according to an embodiment of the disclosure.

Referring to FIG. 8, a UE 810 may report CSI, and a base station 800 may receive the same (801). The base station 800 may transmit an activation/deactivation indication for a reception antenna port of the UE 810, and the UE 810 may receive the same. The base station 800 may identify a channel state between the base station and the UE, and configure and indicate the UE to activate/deactivate some of the reception antenna ports of the UE 810 (802). For example, the channel state between the base station and the UE may be identified from CSI feedback 801 reported by the UE.

It is noted that, compared to a case in which the UE feeds back CSI to the base station assuming one set of the number of antennas of the base station and the UE, the amount of feedback reported by the UE to the base station in a case of reporting CSI regarding X (≥1) and Y (≥1) may be greatly increased. Specifically, in the case of X>1 and Y>1, the CSI overhead may increase by X*Y times as compared to one antenna set. Therefore, the disclosure proposes a CSI dropping method according to the CSI overhead. The specific methods are as follows, and the following methods may be performed independently or, alternatively, at least some of the methods may be performed in combination.
* Method 1: X always has a higher priority than Y.
** Method 1 is a method in which the CSI for the base station antenna set always has a higher priority than the CSI for the UE antenna set. In other words, with the currently applied UE antenna set as a reference, the CSI for the base station antenna set may be prioritized and fed back, and then the CSI for another UE antenna set that is not currently applied may be fed back. First, when CSI for X (>1) is reported, the UE prioritizes and feedbacks the CSI for the antenna set with a higher priority (with higher importance) in each antenna set. Next, when CSI for Y (>1) is reported, the UE also prioritizes and feedbacks the CSI for the antenna set with a higher priority (with higher importance) in each antenna set. If the CSI overhead is increased and all the CSI cannot be fed back to the base station, the CSI with a lower priority (lower importance) for the antenna set may be dropped first.
* Method 2: Y always has a higher priority than X.
**Method 2 is a method in which CSI for the UE antenna set always has a higher priority than the CSI for the base station antenna set. In other words, with the currently applied base station antenna set as a reference, the CSI for the UE antenna set may be prioritized and fed back, and then the CSI for another base station antenna set that is not currently applied may be fed back. First, when CSI for Y (>1) is reported, the UE prioritizes and feedbacks the CSI for the antenna set with a higher priority (with higher importance) in each antenna set. Next, when CSI for X (>1) is reported, the UE also prioritizes and feedbacks the CSI for the antenna set with a higher priority (with higher importance) in each antenna set. If the CSI overhead is increased and all the CSI cannot be fed back to the base station, the CSI with a lower priority (lower importance) for the antenna set may be dropped first.
* Method 3: The priority of X and Y is determined according to the configuration and/or the state.
** The priority of X and Y in method 3 may be determined according to the determination and configuration of the base station. Specifically, the configuration may be implemented as a higher layer configuration such as RRC. In contrast, a configuration method, such as MAC-CE or DCI, may be considered. Alternatively, the configuration method may be determined implicitly according to a specific state. For example, the configuration method may be determined according to whether the base station and the UE perform a power consumption reduction operation. If the base station is in a power consumption reduction operation mode, Method 1 may be applied. In contrast, if the UE is in a power consumption reduction operation mode, Method 2 may be applied. This is for the sake of description and does not limit the disclosure to the above specific mode names.

The UE may report information related to X*Y to the base station as capability information of the UE. The information related to X*Y may be information on the CSI report that the UE may process.

### <Fourth Embodiment>

In the fourth embodiment, an environment in which a base station and a UE are equipped with multiple antennas is considered. Another method is proposed for a UE to report channel state information (CSI) between the base station and the UE on the base station antenna information for a method of activating/deactivating some of the antenna ports.

First, refer to the definition of the antenna set for the base station and UE antennas in the second embodiment. The definition of the antenna set for the base station and UE antennas in the second embodiment may be applied to the fourth embodiment.

The UE may report CSI for X (≥1) and Y(=1) to the base station.

In contrast to the third embodiment, the fourth embodiment considers a case where Y (=1) is fixed or a case where Y (=1). In addition, in contrast to the method in which the base station determines the number of antenna ports of the UE by using the information of antenna activation/deactivation and indicates the same to the UE in the third embodiment, the method in the fourth embodiment is a method in which the UE directly determines the number of the antenna ports of the UE and reports the same to the base station. The number of the reception antenna ports of the UE determined by the UE may be reported to the base station as CSI.

The method presented in the fourth embodiment is a method of providing the UE autonomy/freedom for determining the number of UE's reception antenna ports of the UE, and a method in which whether to permit such an operation is determined by the base station may be considered. In this case, the base station may determine and configure whether to activate or deactivate the operation and indicate and notify the UE thereof. Therefore, only when the base station activates the operation, the UE may dynamically change the reception antenna operation and report the corresponding information to the base station.

The reason why the UE reports the number of dynamically changed reception antennas of the UE to the base station in the embodiment is because the base station needs to compensate the CSI by using the corresponding information. For example, if the base station has fed back two CSIs from the UE and the first and second CSIs have been reported based on assumptions regarding different UE reception antennas, and if the base station uses the two CSIs, the base station must consider the effects of the different assumptions regarding the two CSIs and compensate for the same.

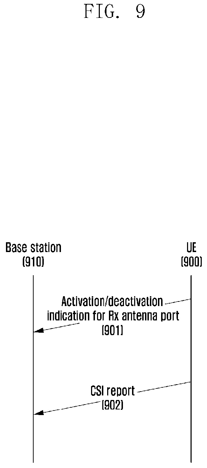

FIG. 9 illustrates an example of a method for activating/deactivating some of antenna ports of a UE according to an embodiment of the disclosure.

Referring to FIG. 9, a UE 900 may transmit an activation/deactivation indication for a reception antenna port of the UE, and the base station 910 may receive the same. The UE 900 may report CSI, and a base station 910 may receive the same. The UE 900 may directly activate/deactivate some of the reception antenna ports of the UE, and report information thereof to the base station 910 (901). When the base station receives CSI feedback from the UE (902), the base station may compensate for the CSI by considering the number of activated/deactivated reception antennas of the UE. A method in which the base station compensates for CSI, based on information received from the UE, may use various methods, and the disclosure is not limited to a specific method.

It is noted that, compared to the case in which the UE assumes one set of the number of antennas of the base station and the UE and feeds back CSI to the base station, the amount of feedback reported by the UE to the base station may be increased in the case of reporting CSI for X (≥1) and Y (=1). Note that, in comparison to the third embodiment, only the CSI overhead for X (>1) may be increased in this case. The UE may determine a CSI dropping method according to different priority values for X (>1) sets. Specifically, when the UE reports CSI for X (>1), the UE prioritizes and feedbacks the CSI for the antenna set with a higher priority (with higher importance) in each antenna set. If the CSI overhead is increased and all the CSI cannot be fed back to the base station, the CSI with a lower priority (lower importance) for the antenna set may be dropped first.

### <Fifth Embodiment>

In the fifth embodiment, an environment in which a base station and a UE are equipped with multiple antennas is considered. In the fifth embodiment, a method of activating/deactivating some of the antenna ports is considered by simultaneously considering the transmission/reception performance between the base station and the UE and power consumption reduction (energy efficiency improvement). The relevant operations will be described in more detail with reference to the accompanying drawings.

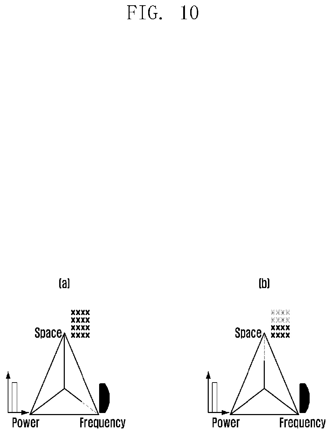

FIG. 10 illustrates an example of a method for activating/deactivating some of antenna ports of a base station according to an embodiment of the disclosure. As shown in FIG. 10, the base station may perform operations for power consumption reduction (energy efficiency improvement) in the power, frequency, and spatial domains. Note that the operation of activating/deactivating some of the base station antenna ports is an operation in the spatial domain.

Specifically, referring to FIG. 10, the base station power consumption may be reduced by activating only some antenna ports as shown in FIG. 10B instead of activating all the antenna ports in the spatial domain as shown in FIG. 10A. For example, 64 CSI-RS ports may be activated, and then the number of activated CSI-RS ports may be reduced to be less than 64 in order to reduce power consumption.

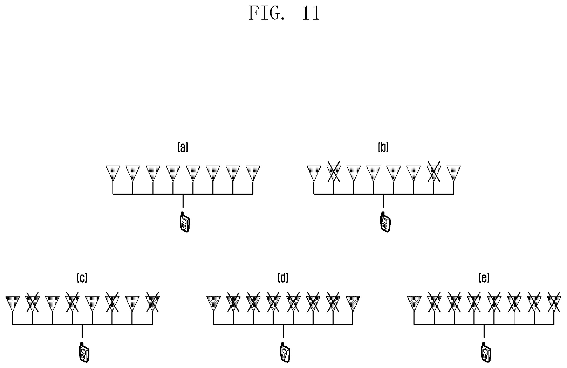

FIG. 11 illustrates an example of a method for activating/deactivating some of antenna ports of a UE according to an embodiment of the disclosure. Referring to FIG. 11, a case in which 8 reception antennas are mounted on the UE is illustrated.

Specifically, as shown in FIG. 11A, instead of activating all 8 UE reception antenna ports (8 Rx mode), only a part of the antenna ports may be activated to reduce the UE power consumption. For example, in the case of 8 antenna ports of the UE, a 6Rx mode (FIG. 11B)) in which 6 ports are activated, a 4Rx mode (FIG. 11C)) in which 4 ports are activated, a 2Rx mode (FIG. 11D) in which 2 ports are activated, and a 1Rx mode (FIG. 11E) in which 1 port is activated may be used. In addition, the UE may report to the base station whether each Rx mode switch is supported. Depending on the UE capability, switching between the UE's Rx modes may be possible only in specific cases. The UE may receive a configuration of a reception antenna port activation/deactivation for each bandwidth (e.g., component carrier (CC), bandwidth part (BWP), etc.) independently.

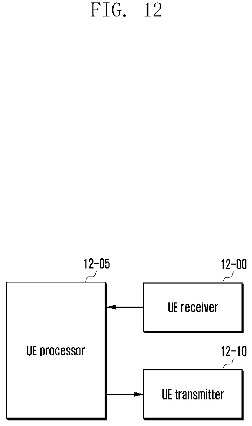

FIG. 12 illustrates a structure of a UE according to an embodiment of the disclosure.

A structure of a UE for performing the above embodiments of the disclosure is illustrated in FIG. 12. Referring to FIG. 12, the UE may include a transceiver 12-00 and 12-10 and a processor 12-05 including a memory and a processor. The transceiver 12-00 and 12-10 and the processor 12-05 of the UE may operate according to the above-described communication methods of the UE. However, components of the UE are not limited to the above-described example. For example, the UE may also include a larger or smaller number of components than the components described above. Furthermore, the transceiver 12-00 and 12-10 and the processor 12-05 may be implemented in the form of a single chip.

The transceiver 12-00 nand 12-10 may transmit/receive signals with base stations. Here, the signals may include control information and data. To this end, the transceiver 12-00 and 12-10 may include an RF transmitter configured to up-convert and amplify the frequency of transmitted signals, an RF receiver configured to low-noise-amplify received signals and down-convert the frequency thereof, and the like. However, this is only an embodiment of the transceiver 12-00 and 12-10, and the components of the transceiver 12-00 and 12-10 are not limited to the RF transmitter and the RF receiver.

In addition, the transceiver 12-00 and 12-10 may receive signals through a radio channel, output the same to the processor 12-05, and transmit signals output from the processor 12-05 through the radio channel.

The processor 12-05 may store programs and data necessary for the operation of the UE. In addition, the processor 12-05 may store control information or data included in signals acquired by the UE. The processor 12-05 may include a memory configured by storage media such as a ROM, a RAM, a hard disk, a CD-ROM, and a DVD, or a combination of storage media.

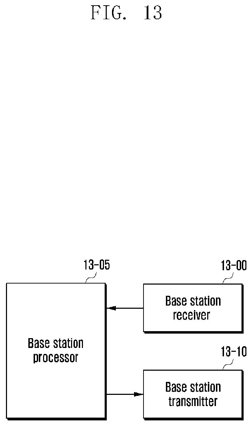

FIG. 13 illustrates a structure of a base station according to an embodiment of the disclosure.

A structure of a base station for performing the above embodiments of the disclosure is illustrated in FIG. 13. Referring to FIG. 13, the base station may include a transceiver 13-00 and 13-10 and a processor 13-05 including a memory and a processor. The transceiver 13-00 and 13-10 and the processor 13-05 of the base station may operate according to the above-described communication methods of the base station. However, components of the base station are not limited to the above-described example. For example, the base station may include a larger or smaller number of components than the components. described above. Furthermore, the transceiver 13-00 and 13-10 and the processor 13-05 may be implemented in the form of a single chip.

The transceiver 13-00 and 13-10 may transmit/receive signals with UEs. Here, the signals may include control information and data. To this end, the transceiver 13-00 and 13-10 may include an RF transmitter configured to up-convert and amplify the frequency of transmitted signals, an RF receiver configured to low-noise-amplify received signals and down-convert the frequency thereof, and the like. However, this is only an embodiment of the transceiver 13-00 and 13-10, and the components of the transceiver 13-00 and 13-10 are not limited to the RF transmitter and the RF receiver.

In addition, the transceiver 13-00 and 13-10 may receive signals through a radio channel, output the same to the processor 13-05, and transmit signals output from the processor 13-05 through the radio channel.

The processor 13-05 may store programs and data necessary for the operation of the base station. In addition, the processor 13-05 may store control information or data included in signals acquired by the base station. The processor 13-05 may include a memory configured by storage media such as a ROM, a RAM, a hard disk, a CD-ROM, and a DVD, or a combination of storage media.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented.

## Claims

1. A method performed by a user equipment (UE) in a communication system, the method comprising:
receiving, via higher layer signaling, a channel state information (CSI) report-related configuration;
identifying a first number of channel state information reference signal (CSI-RS) antenna port subsets based on the CSI report-related configuration;
identifying a second number of reception antenna port subsets;
determining, based on a CSI-RS antenna port subset-related priority and a reception antenna port subset-related priority, one or more CSI-RS antenna port subsets among the first number of CSI-RS antenna port subsets and determining one or more reception antenna port subsets among the second number of reception antenna port subsets;
determining one or more CSI parameters based on the one or more CSI-RS antenna port subsets and the one or more reception antenna port subsets; and
transmitting a CSI report including the one or more CSI parameters.

2. The method of claim 1,
wherein the first number of CSI-RS antenna port subsets correspond to different priorities,
wherein the second number of reception antenna port subsets correspond to different priorities,
wherein, in case that the CSI-RS antenna port subset-related priority is higher than the reception antenna port subset-related priority, the one or more reception antenna port subsets are determined based on different priorities corresponding to the second number of reception antenna port subsets after the one or more CSI-RS antenna port subsets are determined based on different priorities corresponding to the first number of CSI-RS antenna port subsets,
wherein, in case that the reception antenna port subset-related priority is higher than the CSI-RS antenna port subset-related priority, the one or more CSI-RS antenna port subsets are determined based on different priorities corresponding to the first number of CSI-RS antenna port subsets after the one or more reception antenna port subsets are determined based on different priorities corresponding to the second number of reception antenna port subsets, and
wherein the high/low relationship between the CSI-RS antenna port subset-related priority and the reception antenna port subset-related priority is predetermined is predefined, determined by an explicit indication, or determined by an implicit indication.

3. The method of claim 2,
wherein one CSI parameter is based on one CSI-RS antenna port subset and one receive antenna port subset,
wherein, in case that the CSI-RS antenna port subset-related priority is higher than the reception antenna port subset-related priority, the number of the one or more reception antenna port subsets is based on the overhead of a CSI report, and a report for the CSI parameters related to the remaining reception antenna port subsets, excluding the one or more reception antenna port subsets from the second number of reception antenna port subsets, is dropped,
wherein, in case that the reception antenna port subset-related priority is higher than the CSI-RS antenna port subset-related priority, the number of the one or more CSI-RS antenna port subsets is based on the overhead of the CSI report, and a report for the CSI parameters related to the remaining CSI-RS antenna port subsets, excluding the one or more CSI-RS antenna port subsets from the first number of CSI-RS antenna port subsets, is dropped, and
wherein the CSI overhead is related to the processing capability of the UE for the CSI report.

4. The method of claim 1,
wherein each reception antenna port subset includes one or more of the plurality of reception antenna ports of the UE,
wherein the number of reception antenna ports included in each reception antenna port subset is greater than or equal to the number of maximum transmission layers related to the capability of the UE, and
wherein information on the number of reception antenna ports included in each reception antenna port subset is included in the CSI report.

5. The method of claim 1, further comprising receiving, through dynamic signaling, indication information indicating activation or deactivation of one or more of the plurality of reception antenna ports of the UE after transmission of the CSI report.

6. A user equipment (UE) in a communication system, the UE comprising:
a transceiver; and
a processor connected to the transceiver, wherein the processor is configured to:
receive, via higher layer signaling, a channel state information (CSI) report-related configuration;
identify a first number of channel state information reference signal (CSI-RS) antenna port subsets based on the CSI report-related configuration;
identify a second number of reception antenna port subsets;
determine, based on a CSI-RS antenna port subset-related priority and a reception antenna port subset-related priority, one or more CSI-RS antenna port subsets among the first number of CSI-RS antenna port subsets and determine one or more reception antenna port subsets among the second number of reception antenna port subsets;
determine one or more CSI parameters based on the one or more CSI-RS antenna port subsets and the one or more reception antenna port subsets; and
transmit a CSI report including the one or more CSI parameters.

7. The UE of claim 6,
wherein the first number of CSI-RS antenna port subsets correspond to different priorities,
wherein the second number of reception antenna port subsets correspond to different priorities,
wherein, in case that the CSI-RS antenna port subset-related priority is higher than the reception antenna port subset-related priority, the one or more reception antenna port subsets are determined based on different priorities corresponding to the second number of reception antenna port subsets after the one or more CSI-RS antenna port subsets are determined based on different priorities corresponding to the first number of CSI-RS antenna port subsets,
wherein, in case that the reception antenna port subset-related priority is higher than the CSI-RS antenna port subset-related priority, the one or more CSI-RS antenna port subsets are determined based on different priorities corresponding to the first number of CSI-RS antenna port subsets after the one or more reception antenna port subsets are determined based on different priorities corresponding to the second number of reception antenna port subsets, and
wherein the high/low relationship between the CSI-RS antenna port subset-related priority and the reception antenna port subset-related priority is predetermined is predefined, determined by an explicit indication, or determined by an implicit indication.

8. The UE of claim 7,
wherein one CSI parameter is based on one CSI-RS antenna port subset and one receive antenna port subset,
wherein, in case that the CSI-RS antenna port subset-related priority is higher than the reception antenna port subset-related priority, the number of the one or more reception antenna port subsets is based on the overhead of a CSI report, and a report for the CSI parameters related to the remaining reception antenna port subsets, excluding the one or more reception antenna port subsets from the second number of reception antenna port subsets, is dropped,
wherein, in case that the reception antenna port subset-related priority is higher than the CSI-RS antenna port subset-related priority, the number of the one or more CSI-RS antenna port subsets is based on the overhead of the CSI report, and a report for the CSI parameters related to the remaining CSI-RS antenna port subsets, excluding the one or more CSI-RS antenna port subsets from the first number of CSI-RS antenna port subsets, is dropped, and
wherein the CSI overhead is related to the processing capability of the UE for the CSI report.

9. The UE of claim 6,
wherein each reception antenna port subset includes one or more of the plurality of reception antenna ports of the UE,
wherein the number of reception antenna ports included in each reception antenna port subset is greater than or equal to the number of maximum transmission layers related to the capability of the UE, and
wherein information on the number of reception antenna ports included in each reception antenna port subset is included in the CSI report.

10. The UE of claim 6,
wherein the processor is configured to receive, through dynamic signaling, indication information indicating activation or deactivation of one or more of the plurality of reception antenna ports of the UE after transmission of the CSI report.

11. A method performed by a base station in a communication system, the method comprising:
identifying a first number of channel state information reference signal (CSI-RS) antenna port subsets;
transmitting, to a user equipment (UE) via higher layer signaling, a channel state information (CSI) report-related configuration related to the first number of CSI-RS antenna port subsets; and
receiving, from the UE, a CSI report including one or more CSI parameters,
wherein the one or more CSI parameters are based on one or more CSI-RS antenna port subsets among the first number of CSI-RS antenna port subsets and one or more reception antenna port subsets among the second number of reception antenna port subsets of the UE, and
wherein the one or more CSI-RS antenna port subsets and the one or more reception antenna port subsets are based on a CSI-RS antenna port subset-related priority and a reception antenna port subset-related priority.

12. The method of claim 11,
wherein the first number of CSI-RS antenna port subsets correspond to different priorities,
wherein the second number of reception antenna port subsets correspond to different priorities,
wherein, in case that the CSI-RS antenna port subset-related priority is higher than the reception antenna port subset-related priority, the one or more reception antenna port subsets are determined based on different priorities corresponding to the second number of reception antenna port subsets after the one or more CSI-RS antenna port subsets are determined based on different priorities corresponding to the first number of CSI-RS antenna port subsets, and
wherein, in case that the reception antenna port subset-related priority is higher than the CSI-RS antenna port subset-related priority, the one or more CSI-RS antenna port subsets are determined based on different priorities corresponding to the first number of CSI-RS antenna port subsets after the one or more reception antenna port subsets are determined based on different priorities corresponding to the second number of reception antenna port subsets.

13. The method of claim 11, further comprising transmitting, to the UE through dynamic signaling, indication information indicating activation or deactivation of one or more of the multiple reception antenna ports of the UE after reception of the CSI report.

14. A base station in a communication system, the base station comprising:
a transceiver; and
a processor connected to the transceiver, wherein the processor is configured to:
identify a first number of channel state information reference signal (CSI-RS) antenna port subsets;
transmit, to a user equipment (UE) via higher layer signaling, a channel state information (CSI) report-related configuration related to the first number of CSI-RS antenna port subsets; and
receive, from the UE, a CSI report including one or more CSI parameters,
wherein the one or more CSI parameters are based on one or more CSI-RS antenna port subsets among the first number of CSI-RS antenna port subsets and one or more reception antenna port subsets among the second number of reception antenna port subsets of the UE, and
wherein the one or more CSI-RS antenna port subsets and the one or more reception antenna port subsets are based on a CSI-RS antenna port subset-related priority and a reception antenna port subset-related priority.

15. The base station of claim 14,
wherein the first number of CSI-RS antenna port subsets correspond to different priorities,
wherein the second number of reception antenna port subsets correspond to different priorities,
wherein, in case that the CSI-RS antenna port subset-related priority is higher than the reception antenna port subset-related priority, the one or more reception antenna port subsets are determined based on different priorities corresponding to the second number of reception antenna port subsets after the one or more CSI-RS antenna port subsets are determined based on different priorities corresponding to the first number of CSI-RS antenna port subsets, and
wherein, in case that the reception antenna port subset-related priority is higher than the CSI-RS antenna port subset-related priority, the one or more CSI-RS antenna port subsets are determined based on different priorities corresponding to the first number of CSI-RS antenna port subsets after the one or more reception antenna port subsets are determined based on different priorities corresponding to the second number of reception antenna port subsets.
